# FASCICULE DE BREVET EUROPEEN

(11) **EP 3 434 601 B1**
(45) Date de publication et mention de la délivrance du brevet: **15.04.2020**
(21) Numéro de dépôt: 18185396.1
(22) Date de dépôt: 25.07.2018
(51) Int. Cl.: B64D 47/04

(54) **SYSTÈME D'ÉCLAIRAGE POUR UN AÉRONEF**
BELEUCHTUNGSSYSTEM FÜR EIN LUFTFAHRZEUG
LIGHTING SYSTEM FOR AN AIRCRAFT

(30) Priorité: 28.07.2017 FR 1757213
(43) Date de publication de la demande: 30.01.2019
(73) Titulaire: Zodiac Aero Electric, 93100 Montreuil (FR)
(72) Inventeur: Tsao, Christian, 93110 Rosny sous Bois (FR)
(74) Mandataire: Casalonga

(56) Documents cités:
- DE-A1-102016 214 397
- FR-A1- 2 978 425
- FR-A1- 3 013 331
- US-A- 6 028 624
- US-A1- 2008 137 353
- US-B1- 9 643 736

## Description

L'invention a pour domaine technique le système d'éclairage, et plus particulièrement les systèmes d'éclairage embarqués sur un aéronef.

Les systèmes d'éclairage de piste embarqués sur aéronef comprennent actuellement des projecteurs associés pour tout ou partie à une phase de vol parmi le roulage (« taxi » en langue anglaise), le virage (« runway turn-off »), le décollage (« take-off » en langue anglaise) et l'atterrissage (« landing » en langue anglaise).

Ces projecteurs sont distincts et fixés en différents endroits de l'aéronef, notamment sur une jambe de train d'atterrissage, généralement du train d'atterrissage avant, ainsi que sur les ailes, en bord d'attaque, dans l'emplanture de l'aile sur le fuselage, sous le carénage ventral ou sous l'aile pour certains projecteurs escamotables.

De nuit, lors des différentes phases de vol, ces différents projecteurs sont utilisés successivement ou simultanément afin de permettre au pilote d'identifier l'espace dans lequel il doit évoluer.

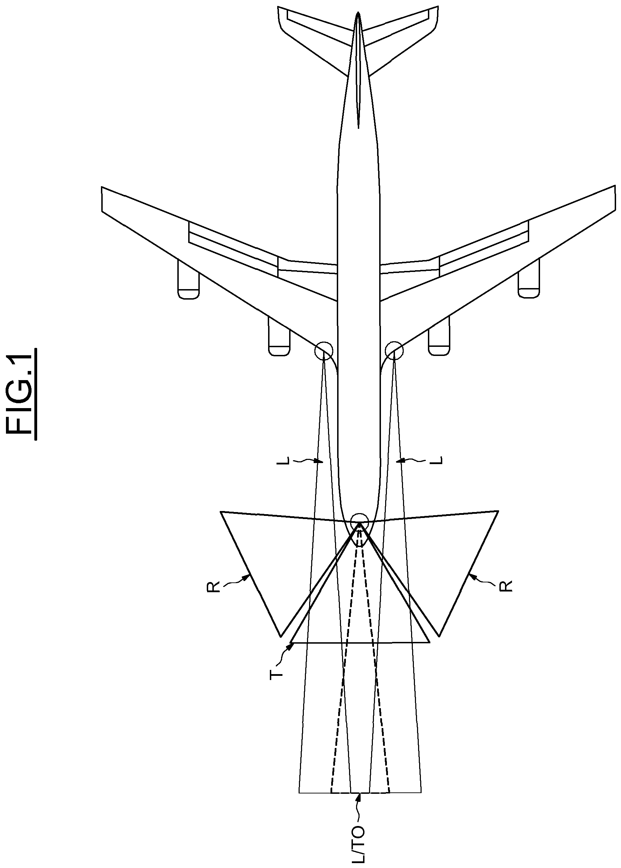

Chaque phase de vol est ainsi associée à un ou plusieurs faisceaux lumineux dont la distribution d'intensité et le pointage sont différents et adaptés aux besoins de visibilité des pilotes. La figure 1 illustre schématiquement une disposition possible des différents faisceaux lumineux ainsi qu'une partie des projecteurs associés. Il est à noter que la représentation est réalisée dans le plan de l'aéronef et ne fait donc pas apparaître les différences de direction de pointage par rapport à ce plan. Les faisceaux d'éclairage en phase d'atterrissage sont référencés L. Les faisceaux d'éclairage en phase de roulage sont référencés T, les faisceaux d'éclairage en phase de virage sont référencés R et les faisceaux d'éclairage en phase de décollage sont référencés TO.

En phase d'approche, les projecteurs d'atterrissage («landing light» en langue anglaise), référencés L sur la figure 1, pointent suivant la trajectoire de descente (trajectoire rectiligne) de manière à éclairer l'endroit où l'avion doit toucher le sol. C'est l'endroit où le pilote doit porter son regard.

En phase de touché (« Touch Down » en langue anglaise) de piste, avant que les roues des trains principaux touchent la piste, l'assiette de l'avion varie et se cabre légèrement. La trajectoire de l'avion change et s'arrondit de sorte à être tangente à la piste.

La phase de touché étant très brève aucun faisceau, jusqu'à présent, n'est dédié spécifiquement à cette phase.

Juste après la phase de touché, le train avant vient en contact avec le sol. Les projecteurs de décollage (« take-off light » en langue anglaise) prennent alors le relais avec un pointage quasiment parallèlement au sol. Ces projecteurs éclairent la piste devant l'aéronef.

Les faisceaux des phases de décollage et d'atterrissage sont caractérisés par un type de faisceau dont la distribution spatiale d'intensité lumineuse est identique et collimatée sur la direction de pointage ; en bout de piste pour la phase de décollage et suivant la pente de descente pour la phase d'atterrissage.

En phase de roulage, les projecteurs de roulage (« taxi light » en langue anglaise) et de virage (« runway turn off light » en langue anglaise) sont utilisés sur les voies de circulation (« taxiway » en langue anglaise) pour quitter ou accéder à la piste. L'éclairage lors de cette phase est caractérisé par une distribution lumineuse fortement étalée horizontalement afin d'identifier un obstacle aux abords de l'aéronef, principalement devant le cockpit (« Taxi Light ») et devant les ailes (« runway turn off light »).

Ces faisceaux doivent rester concentrés verticalement et rabattus vers le sol pour minimiser l'éblouissement des personnels de piste croisant ces deux types de faisceau.

De tels systèmes d'éclairage sont divulgués dans les documents US 9 643 736, US 6 028 624 et US 2008/0137353.

Ces systèmes d'éclairage présentent des inconvénients notables. Tout d'abord, les projecteurs sont fixes et ne peuvent donc pas suivre les variations angulaires d'incidence de l'aéronef lors des phases d'atterrissage et de décollage, notamment lors des variations de direction ou de force des vents dominants. En raison des variations importantes d'assiette de l'aéronef, au regard de la précision de pointage nécessaire, l'éclairement ainsi réalisé sur la piste peut être très variable en efficacité et en pointage.

L'utilisation d'un nombre important de projecteurs distincts présente également l'inconvénient d'un encombrement et d'un poids importants, paramètres critiques en aéronautique.

Par ailleurs, la consommation électrique et le nombre d'emplacements nécessaires pour assurer un éclairage satisfaisant au regard des performances demandées créent une contrainte d'implantation et d'alimentation électrique notable.

De plus, l'allumage simultané des faisceaux d'atterrissage et de décollage dégrade la perception visuelle des pilotes à cause de la rétrodiffusion lumineuse de la brume dans l'air humide qui diminue le contraste des zones observées. En effet, les projecteurs à miroir utilisés en aéronautique ne reflètent qu'environ la moitié de la lumière générée par le miroir pour former le faisceau. Le reste de la lumière générée par la source ne subit aucune réflexion et sort directement de l'avion suivant un angle solide très large. Une partie de cette lumière perdue passe entre le pilote et le faisceau utilisé qui illumine la scène. Lorsque le temps est sec, ce faisceau de lumière perdue n'illumine aucune particule en suspension dans l'air, dans le champ de vision du pilote. En revanche, en période de brume, les particules en suspension dans le champ de vision du pilote sont illuminées, créant un voile plus ou moins dense de lumière rétrodiffusée. Cette rétrodiffusion dégrade le contraste et peut éblouir le pilote, notamment lorsque le brouillard est dense.

Il existe donc un besoin pour un système d'éclairage pour un aéronef comprenant un nombre restreint de projecteurs par rapport à l'existant tout en fournissant un éclairement au moins égal.

L'invention a pour objet un système d'éclairage pour un aéronef selon la revendication 1, comprenant au moins un dispositif d'acquisition optique, au moins un projecteur à longue portée comprenant chacun au moins une source lumineuse, des moyens d'asservissement, et un moyen de commande des sources lumineuses en fonction des données reçues du dispositif d'acquisition optique et d'un réseau de données de l'aéronef de sorte que le système d'éclairage produise au moins un faisceau d'éclairage de manière adaptative par rapport aux phases de vol et de roulage de l'aéronef de sorte à éclairer au moins une zone prédéfinie de l'espace autour de l'aéronef.

Le projecteur lumineux à longue portée peut être apte à illuminer une piste pour aéronef à une distance d'au moins 300m.

Le projecteur à longue portée peut comprendre un dispositif de balayage à haute vitesse muni d'au moins deux surfaces réfléchissantes rotatives, dont les axes de rotation sont orthogonaux et disposés de sorte que le faisceau en sortie de la source lumineuse se réfléchisse successivement sur l'une puis l'autre des surfaces réfléchissantes.

Le projecteur à longue portée peut comprendre au moins un système optique centré à focale variable ou au moins un système optique centré à focale fixe dont le plan focal est occupé par une source lumineuse, ainsi que des moyens de déplacement de la source lumineuse de sorte que la direction du faisceau lumineux puisse être inclinée par rapport à l'axe du système optique centré et/ou déplacée perpendiculairement au plan focal de sorte que l'ouverture du faisceau puisse être agrandie.

Le projecteur à longue portée peut comprendre une glace striée et prismée, disposée en sortie du système optique centré et permettant de générer au moins un faisceau d'éclairage.

Le projecteur à longue portée peut comprendre un ensemble d'au moins deux luminophores, aptes chacun à absorber la lumière émise par une source lumineuse et à réémettre de la lumière blanche.

La source lumineuse peut être une source de type laser ou une source lumineuse de type laser obtenue par combinaison d'une source lumineuse monochromatique de type laser de couleur rouge, d'une source lumineuse monochromatique de type laser de couleur verte et d'une source lumineuse monochromatique de type laser de couleur bleue.

L'invention a également pour objet un procédé de commande d'un système d'éclairage selon la revendication 8 comprenant les étapes suivantes :
on acquiert une image de la scène devant l'avion avec au moins un dispositif d'acquisition optique,
on réalise une reconnaissance de formes sur l'image acquise de la scène afin de distinguer les différents objets présents, notamment la piste, la signalisation au sol, et d'éventuels obstacles,
on obtient des informations de vol du réseau de données de l'aéronef,
on détermine la phase de vol en cours en fonction des informations acquises et d'un modèle prédéterminé,
on détermine au moins un faisceau d'éclairage à allumer ainsi que leur direction et leur étalement en fonction de la phase de vol déterminée et des objets reconnus devant l'avion,
on détermine les consignes à direction des sources lumineuses, des moyens d'asservissement et lorsque cela est applicable, des moyens de déplacement d'au moins une source lumineuse en fonction des faisceaux d'éclairage à allumer ainsi que leurs directions et leurs étalements.

Les informations de vol peuvent comprendre au moins une valeur parmi la vitesse, l'altitude, l'angle d'attitude, la poussée, l'état d'inversion de la poussée, le contact au sol des roues, la position des bords d'attaque et des volets.

Pour déterminer au moins un faisceau d'éclairage à allumer ainsi que leur direction et leur étalement, pour chaque faisceau d'éclairage à allumer, on peut déterminer l'angle vertical, l'angle horizontal et la direction de pointage du faisceau en fonction de valeurs prédéterminées des coordonnées et de l'étendue de la zone à éclairer de sorte que le faisceau éclaire une zone prédéfinie de l'espace autour de l'aéronef, puis on peut corriger les valeurs déterminées en fonction des données de vol comprenant au moins les positions respectives de la piste et de l'aéronef.

Le système d'éclairage présente l'avantage d'être un système multifonction et polyvalent, configurable en étendue et en direction depuis les zones de très longue portée au-delà des fonctions d'atterrissage traditionnelles grâce à l'utilisation de la technologie laser jusqu'aux zones proches de roulage de l'aéronef.

Le système présente également l'avantage d'un asservissement et d'une adaptation des faisceaux suivant les directions verticale et horizontale grâce à l'utilisation d'un dispositif d'acquisition optique et d'un procédé de commande permettant le suivi et l'analyse des zones à éclairer.

Le système d'éclairage est également avantageux par rapport à l'existant de par la diminution des éblouissements et des lumières parasites du fait de l'utilisation d'un faisceau laser collimaté et de par la diminution du nombre d'équipements nécessaires à la production des différents faisceaux d'éclairage d'un aéronef.

Enfin l'invention peut être utilisée en complément d'un éclairage traditionnel en étant intégrée dans un système d'éclairage de type LED, HID ou Halogène. Dans ce cas de figure, l'invention est asservie en pointage par rapport au traitement d'image issu du dispositif d'acquisition optique intégré. Si l'asservissement n'est pas opérationnel alors le pointage du faisceau d'éclairage laser sera judicieusement prédéterminé suivant un pointage par défaut.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre une disposition des différents faisceaux lumineux sur un aéronef selon un mode de réalisation de l'état de l'art,
- la figure 2 illustre les différents faisceaux d'éclairage générés par le système d'éclairage selon un mode de réalisation de l'invention,
- la figure 3 illustre un premier mode de réalisation d'un système d'éclairage selon l'invention,
- la figure 4 illustre un deuxième mode de réalisation d'un système d'éclairage selon l'invention,
- la figure 5 illustre un troisième mode de réalisation d'un système d'éclairage selon l'invention, et
- la figure 6 illustre les différentes étapes d'un procédé de commande du système d'éclairage selon l'invention.

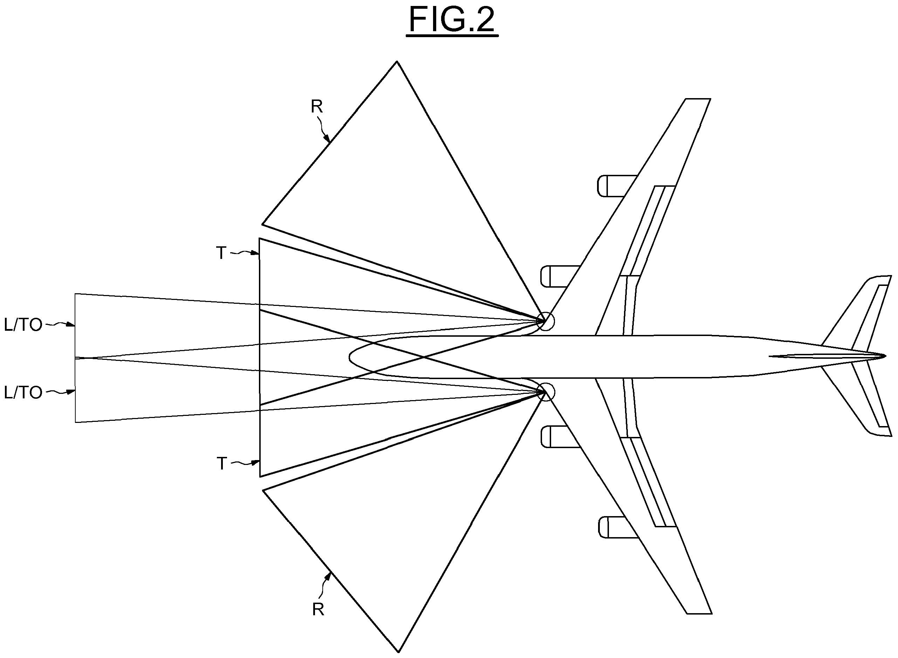

Le système d'éclairage 1 selon l'invention permet de remplacer l'ensemble des projecteurs associés aux différentes phases de vol de l'aéronef par au moins un projecteur à longue portée asservi en direction de pointage (orientation) et en distribution d'intensité lumineuse (étendue) par rapport aux différentes phases de vol décrites précédemment. La figure 2 illustre les différents faisceaux d'éclairage générés par le système d'éclairage 1 selon l'invention. Il est à noter que les faisceaux de décollage et d'atterrissage sont ici fusionnés et référencés L/TO.

Le système d'éclairage 1 permet, non seulement, de diminuer le nombre d'équipements requis mais aussi d'en optimiser les performances afin d'améliorer les éléments de la scène entourant l'aéronef visibles par le pilote en fonction de chaque phase de vol et d'augmenter la portée lumineuse des faisceaux d'approche et d'atterrissage.

Le système d'éclairage 1 est apte à créer au moins un faisceau lumineux d'éclairage pour chaque phase de vol parmi le roulage (« taxi » en langue anglaise), le virage (« runway turn-off »), le décollage (« take-off » en langue anglaise) et l'atterrissage (« landing » en langue anglaise). Alternativement, le système d'éclairage 1 est apte à créer tout ou partie de ces faisceaux lumineux d'éclairage.

Le système d'éclairage 1 comprend un dispositif d'acquisition optique 2, au moins un projecteur à longue portée 12a, 12b, 13a, 13b, 14a, 14b comprenant une source lumineuse 3a,3b, des moyens d'asservissement 4, et un moyen de commande 5 des sources lumineuses 3a,3b et des moyens d'asservissement 4 et, lorsque cela est applicable, des moyens de déplacement d'au moins une source lumineuse 3a,3b.

Par commande des sources lumineuses 3a,3b, on entend la durée d'allumage, la commande du dispositif de balayage à haute vitesse et leur synchronisation.

Tous les éléments compris dans le système d'éclairage 1 sont disposés au plus proche les uns des autres de sorte à éviter les inconvénients décrits en introduction.

Le moyen de commande 5 et les moyens d'asservissement 4 permettent de modifier l'étendue et la direction d'au moins un faisceau lumineux 6a,6b en fonction des phases de vol (approche, atterrissage, roulage et décollage) de sorte que les faisceaux lumineux produits correspondent au moins aux faisceaux lumineux produits par les systèmes d'éclairage équipant les aéronefs selon l'état de l'art.

Différents modes de réalisation de l'invention vont maintenant être décrits en rapport avec la génération des faisceaux illustrés sur la figure 2. Ces modes de réalisation font référence à deux projecteurs à longue portée, disposés chacun sur une aile de l'aéronef, notamment au niveau de leurs emplantures. Toutefois, il apparaît de façon évidente que le nombre et la disposition des projecteurs à longue portée peuvent être modifiés sans sortir de la portée de l'invention et sans faire preuve d'activité inventive. Notamment, lors d'une implantation sur le carénage ventral de l'aéronef, on peut n'utiliser qu'un projecteur à longue portée.

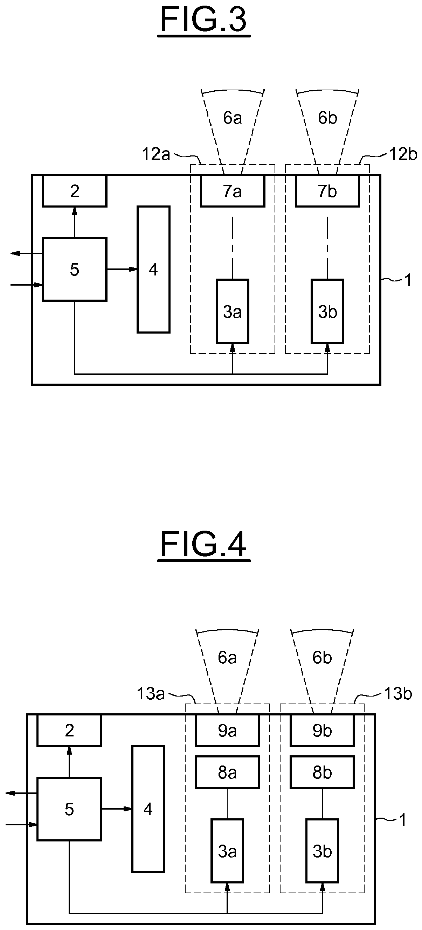

Dans un premier mode de réalisation illustré par la figure 3, le système d'éclairage 1 comprend deux projecteurs à longue portée 12a,12b comprenant chacun un dispositif de balayage à haute vitesse 7a,7b muni d'au moins deux surfaces réfléchissantes rotatives dont les axes de rotation sont orthogonaux. Chaque ensemble d'au moins deux surfaces réfléchissantes est disposé de sorte que le faisceau en sortie de la source lumineuse 3a,3b correspondante se réfléchisse successivement sur l'une puis l'autre des surfaces réfléchissantes 7a,7b en rotation. Chaque surface réfléchissante est directement reliée à l'axe d'un moteur de sorte que l'axe du moteur soit compris dans le plan de la surface réfléchissante.

Selon la position des surfaces réfléchissantes, leurs vitesses angulaires et la durée d'allumage de la source lumineuse, il est possible d'illuminer un point, une droite, une courbe. Il est également possible d'illuminer une surface en juxtaposant un ensemble de droites suffisamment rapprochées de sorte que l'observateur ne voit pas d'espacement entre elles. Combinées avec une vitesse de réalisation inférieure à la durée de persistance rétinienne, il est ainsi possible de réaliser des figures complexes parcourues par un seul point.

Dans un mode de réalisation particulier, la source lumineuse 3a,3b est une source de type laser.

Les sources lumineuses de type laser présentent l'avantage de pouvoir générer une luminance nettement plus élevée que les autres sources lumineuses (LED, Incandescence ou Décharge). On peut ainsi collimater et canaliser le flux lumineux émis dans un angle solide extrêmement fin et étroit, ce qui permet d'en augmenter la portée.

Les sources lumineuses de type laser n'émettent pas non plus de lumière perdue. Le balayage du spot laser restant dans l'angle solide du faisceau utile, la lumière perdue est inexistante. Cela ne crée pas de rétrodiffusion parasite en dehors du faisceau utile. Cette situation améliore le contraste de la scène éclairée et évite les éblouissements vers le pilote lors de présence de particules ou de brouillard.

Dans un autre mode de réalisation particulier, la source lumineuse 3a,3b est obtenue par combinaison de trois sources lumineuses monochromatiques de type laser, rouge, vert et bleu. La source lumineuse ainsi obtenue permet de bénéficier des caractéristiques des sources laser tout en présentant une couleur issue de la combinaison chromatique des sources rouge, vert et bleu. Il est ainsi possible d'obtenir une couleur blanche ou toute couleur du spectre lumineux. Une telle caractéristique permet de reproduire la lumière blanche d'éclairage telle que préconisée dans les standards aéronautiques. Une telle caractéristique en combinaison avec la capacité de projection de motifs permet également de projeter des schémas ou écritures au sol. Il est ainsi possible de projeter des informations à destination du personnel de piste, notamment des mises en garde ou des instructions de positionnement (zone de danger devant les réacteurs, angles morts du pilote, identification de l'avion, communication avec les autorités en cas d'agression des occupants (ex. sos), etc...).

Selon un autre mode de réalisation illustré par la figure 4, chaque projecteur lumineux à longue portée 13a,13b du système d'éclairage 1 comprend en outre au moins un système optique centré à focale variable 8a,8b dont le foyer est occupé par la source lumineuse 3a,3b.

Le système optique centré 8a,8b est muni de moyens de déplacement de la source lumineuse à longue portée 3a,3b de sorte que la direction du faisceau lumineux puisse être décalée autour de l'axe du système optique centré 8a,8b. En d'autres termes, la source lumineuse 3a,3b peut être déplacée dans un plan perpendiculaire à la direction de l'axe du système optique centré 8a,8b. Lorsque l'axe du système optique centré 8a,8b n'est pas aligné avec le faisceau lumineux, le point de focalisation du faisceau lumineux en sortie du système optique centré 8a,8b se trouve désaxé de sorte que l'on dévie le faisceau.

Par ailleurs, la variation de focale du système optique centré 8a,8b permet une mise en forme du faisceau.

Le système optique centré 8a,8b peut également être muni d'une glace striée et prismée 9a,9b permettant de générer le faisceau final d'éclairage 6a,6b. Les zones prismées permettent de dévier les rayons incidents. Les zones striées permettent d'étaler les rayons incidents. Les zones prismées et les zones striées peuvent être superposées pour étaler et dévier les rayons incidents. Une glace striée et prismée permet ainsi de dévier, distribuer et générer le faisceau d'éclairage.

Utilisés en combinaison, le système optique centré 8a,8b et la glace striée et prismée 9a,9b permettent de générer plusieurs faisceaux à différentes orientations à partir d'une source unique. En prévoyant plusieurs zones de la glace striée et prismée 9 munies de différentes combinaisons de prismes et de stries, on peut permettre la génération de faisceaux différents, présentant chacun un décalage et un étalement différent.

Le système optique centré 8a,8b permettant de choisir la zone à éclairer et son centrage, il est alors possible d'illuminer sélectivement chaque zone de la glace striée et prismée 9a,9b de sorte à choisir quel faisceau est illuminé en fonction des faisceaux prévus sur la glace striée et prismée. Il est également possible de générer plusieurs faisceaux en illuminant une zone plus importante de la glace striée et prismée 9a,9b.

Par ailleurs, le système d'éclairage 1 peut comprendre plusieurs systèmes optiques centrés associés chacun à au moins une glace striée et prismée.

Dans un mode de réalisation particulier, la source lumineuse 3a,3b est une source de type laser. Dans un autre mode de réalisation particulier, la source lumineuse 3a,3b est obtenue par combinaison de trois sources lumineuses monochromatiques de type laser, rouge, vert et bleu. La source lumineuse ainsi obtenue permet de bénéficier des caractéristiques des sources laser tout en présentant une couleur issue de la combinaison chromatique des sources rouge, vert et bleu. Il est ainsi possible d'obtenir une couleur blanche ou toute couleur du spectre lumineux. Une telle caractéristique permet de reproduire la lumière blanche d'éclairage telle que préconisée dans les standards aéronautiques. Une telle caractéristique en combinaison avec la capacité de projection de motifs permet également de projeter des schémas ou écritures au sol. Il est ainsi possible de projeter des informations à destination du personnel de piste, notamment des mises en garde ou des instructions de positionnement (zone de danger devant les réacteurs, angles morts du pilote, identification de l'avion, communication avec les autorités en cas d'agression des occupants (ex. sos), etc ...).

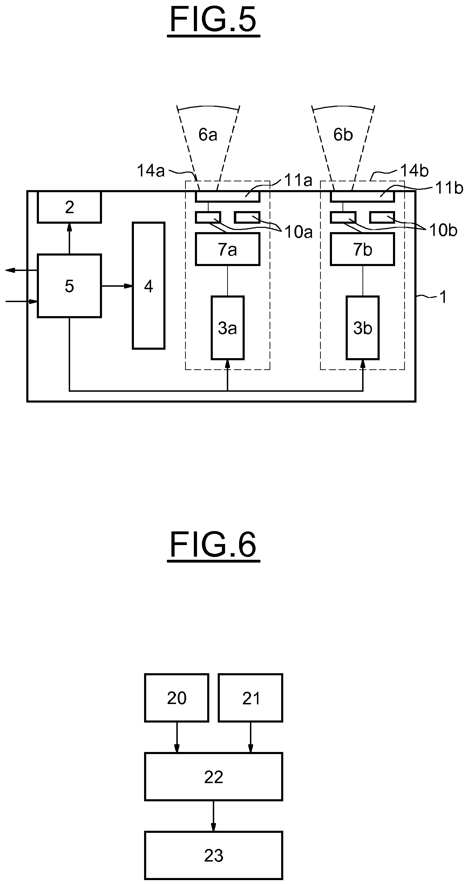

Selon un autre mode de réalisation illustré par la figure 5, chaque projecteur lumineux à longue portée 14a,14b du système d'éclairage 1 comprend un ensemble 10a,10b d'au moins deux luminophores. On rappelle qu'un luminophore est une substance qui absorbe de la lumière à une première longueur d'onde pour réémettre de la lumière à une deuxième longueur d'onde.

Les luminophores 10a,10b sont disposés de sorte à couvrir chacun une direction prédéfinie d'émission d'un faisceau lumineux de sorte que chaque direction de pointage soit couverte par l'allumage du luminophore correspondant.

L'allumage d'un des luminophores 10a,10b est réalisé soit par l'allumage d'une source d'illumination correspondante, notamment une source laser à la fréquence d'absorption du luminophore. Dans un mode de réalisation particulier, la source lumineuse 3a,3b de type laser et les luminophores 10a,10b sont fixes les uns par rapport aux autres. L'asservissement d'une optique de projection et de mise en forme du faisceau permet l'illumination des zones de piste prédéfinies lors des différentes phases d'approche, d'atterrissage, de roulage et de décollage de nuit.

L'allumage d'un des luminophores 10a,10b peut aussi être réalisé par un balayage sélectif du luminophore par l'intermédiaire d'une source lumineuse 3a,3b associée à un dispositif de balayage à haute vitesse 7a,7b tel qu'illustré par la figure 5. Dans ce dernier cas, plusieurs luminophores peuvent être illuminés par une seule source lumineuse.

Dans les deux cas, chacun des luminophores 10a,10b se comporte comme une source lumineuse secondaire et est disposé au foyer d'une optique de projection 11a,11b.

La figure 6 illustre les différentes étapes d'un procédé de commande selon l'invention.

Au cours d'une première étape 20, on acquiert une image de la scène devant l'avion. On réalise ensuite une reconnaissance de formes afin de distinguer les différents objets présents, notamment la piste, la signalisation au sol, et d'éventuels obstacles.

Au cours d'une deuxième étape 21, on obtient des informations de vol du réseau de données de l'aéronef afin de déterminer la phase de vol en cours. Ces informations comprennent notamment la vitesse, l'altitude ainsi que l'angle d'attitude. D'autres informations peuvent être prises en compte telles que la poussée, l'état d'inversion de la poussée, le contact au sol des roues, la position des bords d'attaque et des volets. En fonction des informations acquises et d'un modèle prédéterminé, on détermine la phase de vol en cours.

Au cours d'une troisième étape 22, on détermine le au moins un faisceau d'éclairage à allumer ainsi que leur direction et leur étalement en fonction de la phase de vol déterminée et des objets reconnus devant l'avion.

Pour réaliser cela et pour chaque faisceau d'éclairage à allumer, on détermine l'angle vertical, l'angle horizontal et la direction de pointage du faisceau par l'intermédiaire d'un algorithme de traitement d'images, ces dernières étant issues du dispositif d'acquisition optique intégré, de sorte que le faisceau éclaire une zone prédéfinie de l'espace devant l'aéronef. Ainsi, pour chaque type de faisceau d'éclairage, on mémorise les coordonnées et l'étendue de la zone à éclairer. On corrige ensuite ces valeurs en fonction de données de vol et des objets reconnus. Notamment, on corrige les coordonnées et l'étendue de la zone à éclairer en fonction des positions respectives de la piste et de l'avion.

Une fois déterminé la direction et l'étalement de chaque faisceau d'éclairage, au cours d'une étape quatrième 23, on détermine les consignes correspondantes à la direction des sources lumineuses 3a,3b, des moyens d'asservissement 4 et lorsque cela est applicable, des moyens de déplacement d'au moins une source lumineuse.

Le procédé est exécuté en boucle tant que l'aéronef se trouve dans une des phases de vol concernées.

## Revendications

1. Système d'éclairage d'un aéronef, comprenant un dispositif d'acquisition optique, au moins un projecteur à longue portée (12a,12b,13a,13b,14a,14b) comprenant chacun au moins une source lumineuse (3a,3b), des moyens d'asservissement (4), et un moyen de commande (5) des sources lumineuses (3a,3b), **caractérisé en ce que** le moyen de commande (5) est fonction des données reçues du dispositif d'acquisition optique et d'un réseau de données de l'aéronef de sorte que le système d'éclairage produise au moins un faisceau d'éclairage de manière adaptative par rapport à chacune des phases de vol et de roulage de l'aéronef de sorte à éclairer au moins une zone prédéfinie de l'espace autour de l'aéronef,
les phases de vol et de roulage comprenant la phase de roulage, la phase de virage, la phase de décollage/atterrissage, la phase d'approche et la phase de touché.

2. Système selon la revendication précédente, dans lequel le projecteur lumineux à longue portée (12a,12b,13a,13b,14a,14b) est apte à illuminer une piste pour aéronef à une distance d'au moins 300m.

3. Système selon la revendication 1 ou 2, dans lequel le projecteur à longue portée (12a,12b,13a,13b,14a,14b) comprend un dispositif de balayage à haute vitesse (7a,7b) muni d'au moins deux surfaces réfléchissantes rotatives, dont les axes de rotation sont orthogonaux et disposés de sorte que le faisceau en sortie de la source lumineuse (3) se réfléchisse successivement sur l'une puis l'autre des surfaces réfléchissantes.

4. Système selon la revendication 1 ou 2, dans lequel le projecteur à longue portée (12a,12b,13a,13b,14a,14b) comprend au moins un système optique centré à focale variable (8a,8b) ou au moins un système optique centré à focale fixe dont le plan focal est occupé par une source lumineuse (3a,3b), ainsi que des moyens de déplacement de la source lumineuse (3a,3b) de sorte que la direction système optique centré (8a,8b) et/ou déplacée perpendiculairement au plan focal de sorte que l'ouverture du faisceau puisse être agrandie.

5. Système selon la revendication 4, dans lequel le projecteur à longue portée (12a,12b,13a,13b,14a,14b) comprend une glace striée et prismée (9a,9b), disposée en sortie du système optique centré (8a,8b) et permettant de générer au moins un faisceau d'éclairage.

6. Système selon l'une quelconque des revendications précédentes, dans lequel le projecteur à longue portée (12a,12b,13a,13b,14a,14b) comprend un ensemble (10a,10b) d'au moins deux luminophores, aptes chacun à absorber la lumière émise par une source lumineuse (3a,3b) et à réémettre de la lumière blanche.

7. Système selon l'une quelconque des revendications précédentes, dans lequel la source lumineuse (3a,3b) est une source lumineuse de type laser ou une source lumineuse de type laser obtenue par combinaison d'une source lumineuse monochromatique de type laser de couleur rouge, d'une source lumineuse monochromatique de type laser de couleur verte et d'une source lumineuse monochromatique de type laser de couleur bleue.

8. Procédé de commande d'un système d'éclairage selon l'une quelconque des revendications précédentes, **caractérisé par le fait qu'**il comprend les étapes suivantes :
on acquiert une image de la scène devant l'avion avec un dispositif d'acquisition optique (2),
on réalise une reconnaissance de formes sur l'image acquise de la scène afin de distinguer les différents objets présents, notamment la piste, la signalisation au sol, et d'éventuels obstacles,
on obtient des informations de vol du réseau de données de l'aéronef,
on détermine la phase de vol en cours en fonction des informations acquises et d'un modèle prédéterminé,
pour chaque phase de vol, on détermine au moins un faisceau d'éclairage à allumer ainsi que leur direction et leur étalement en fonction de la phase de vol déterminée et des objets reconnus devant l'avion,
on détermine les consignes à direction des sources lumineuses (3a,3b), des moyens d'asservissement (4) et lorsque cela est applicable, des moyens de déplacement d'au moins une source lumineuse en fonction des faisceaux d'éclairage à allumer ainsi que leurs directions et leurs étalements,
les phases de vol et de roulage comprenant la phase de roulage, la phase de virage, la phase de décollage/atterrissage, la phase d'approche et la phase de touché.

9. Procédé selon la revendication 8, dans lequel les informations de vol comprennent au moins une valeur parmi la vitesse, l'altitude, l'angle d'attitude, la poussée, l'état d'inversion de la poussée, le contact au sol des roues, la position des bords d'attaque et des volets.

10. Procédé selon l'une quelconque des revendications 8 ou 9, dans lequel, pour déterminer au moins un faisceau d'éclairage à allumer ainsi que leur direction et leur étalement,
pour chaque faisceau d'éclairage à allumer,
on détermine l'angle vertical, l'angle horizontal et l'ouverture du faisceau en fonction de valeurs prédéterminées des coordonnées et de l'étendue de la zone à éclairer de sorte que le faisceau éclaire une zone prédéfinie de l'espace autour de l'aéronef, puis on corrige les valeurs déterminées en fonction des données de vol comprenant au moins les positions respectives de la piste et de l'aéronef.

## Patentansprüche

1. Beleuchtungssystem eines Luftfahrzeugs, welches eine Vorrichtung zur optischen Erfassung, wenigstens einen Fernscheinwerfer (12a, 12b, 13a, 13b, 14a, 14b), der jeweils wenigstens eine Lichtquelle (3a, 3b), Nachführmittel (4) und ein Steuerungsmittel (5) für die Lichtquellen (3a, 3b) umfasst, **dadurch gekennzeichnet, dass** das Steuerungsmittel (5) in Abhängigkeit von den Daten steuert, die es von der Vorrichtung zur optischen Erfassung und von einem Datennetz des Luftfahrzeugs empfängt, so dass das Beleuchtungssystem wenigstens einen Beleuchtungsstrahl auf adaptive Weise in Bezug auf jede der Flug- und Rollphasen des Luftfahrzeugs erzeugt, um wenigstens einen vordefinierten Bereich des Raumes um das Luftfahrzeug zu beleuchten, wobei die Flug- und Rollphasen die Rollphase, die Kurvenphase, die Start-/Landephase, die Anflugphase und die Aufsetzphase umfassen.

2. System nach dem vorhergehenden Anspruch, wobei der Fernscheinwerfer (12a, 12b, 13a, 13b, 14a, 14b) in der Lage ist, eine Start- und Landebahn für ein Luftfahrzeug in einer Entfernung von wenigstens 300 m zu beleuchten.

3. System nach Anspruch 1 oder 2, wobei der Fernscheinwerfer (12a, 12b, 13a, 13b, 14a, 14b) eine Vorrichtung zur Abtastung mit hoher Geschwindigkeit (7a, 7b) umfasst, die mit wenigstens zwei rotierenden reflektierenden Flächen versehen ist, deren Drehachsen orthogonal und so angeordnet sind, dass der aus der Lichtquelle (3) austretende Strahl nacheinander an der einen und danach an der anderen der reflektierenden Flächen reflektiert wird.

4. System nach Anspruch 1 oder 2, wobei der Fernscheinwerfer (12a, 12b, 13a, 13b, 14a, 14b) wenigstens ein zentriertes optisches System mit variabler Brennweite (8a, 8b) umfasst, oder wenigstens ein zentriertes optisches System mit fester Brennweite, dessen Brennebene von einer Lichtquelle (3a, 3b) eingenommen wird, sowie Mittel zur Verlagerung der Lichtquelle (3a, 3b), so dass die Richtung des Lichtstrahls in Bezug auf die Achse des zentrierten optischen Systems (8a, 8b) geneigt werden kann und/oder sie senkrecht zur Brennebene verlagert wird, so dass die Öffnung des Strahls vergrößert werden kann.

5. System nach Anspruch 4, wobei der Fernscheinwerfer (12a, 12b, 13a, 13b, 14a, 14b) eine geriffelte und prismatische Streuscheibe (9a, 9b) umfasst, die am Austritt des zentrierten optischen Systems (8a, 8b) angeordnet ist und ermöglicht, wenigstens einen Beleuchtungsstrahl zu erzeugen.

6. System nach einem der vorhergehenden Ansprüche, wobei der Fernscheinwerfer (12a, 12b, 13a, 13b, 14a, 14b) eine Anordnung (10a, 10b) von wenigstens zwei Leuchtstoffen umfasst, die jeweils in der Lage sind, das von einer Lichtquelle (3a, 3b) ausgesendete Licht zu absorbieren und weißes Licht abzugeben.

7. System nach einem der vorhergehenden Ansprüche, wobei die Lichtquelle (3a, 3b) eine Lichtquelle vom Typ eines Lasers ist, oder eine Lichtquelle vom Typ eines Lasers, die durch Kombination einer monochromatischen Lichtquelle vom Typ eines roten Lasers, einer monochromatischen Lichtquelle vom Typ eines grünen Lasers und einer monochromatischen Lichtquelle vom Typ eines blauen Lasers erhalten wird.

8. Verfahren zur Steuerung eines Beleuchtungssystems nach einem der vorhergehenden Ansprüche, **dadurch gekennzeichnet, dass** es die folgenden Schritte umfasst:
Mit einer Vorrichtung zur optischen Erfassung (2) wird ein Bild der Szene vor dem Flugzeug erfasst, in dem erfassten Bild der Szene wird eine Formenerkennung durchgeführt, um die verschiedenen vorhandenen Objekte zu unterscheiden, insbesondere die Start- und Landebahn, die Bodenmarkierungen und eventuelle Hindernisse,
es werden Fluginformationen vom Datennetz des Luftfahrzeugs gewonnen,
in Abhängigkeit von den erfassten Informationen und von einem vorbestimmten Modell wird die aktuelle Flugphase bestimmt,
für jede Flugphase werden wenigstens ein zu erzeugender Beleuchtungsstrahl sowie dessen Richtung und dessen Verbreiterung in Abhängigkeit von der bestimmten Flugphase und den vor dem Flugzeug erkannten Objekten bestimmt,
es werden die Anweisungen zur Steuerung der Lichtquellen (3a, 3b), der Nachführmittel (4) und, falls zutreffend, der Mittel zur Verlagerung wenigstens einer Lichtquelle in Abhängigkeit von den zu erzeugenden Beleuchtungsstrahlen sowie deren Richtungen und deren Verbreiterungen bestimmt,
wobei die Flug- und Rollphasen die Rollphase, die Kurvenphase, die Start-/Landephase, die Anflugphase und die Aufsetzphase umfassen.

9. Verfahren nach Anspruch 8, wobei die Fluginformationen wenigstens einen Wert aus der Geschwindigkeit, der Höhe, dem Fluglagewinkel, dem Schubumkehrzustand, dem Bodenkontakt der Räder, der Position der Vorderkanten und der Klappen umfassen.

10. Verfahren nach einem der Ansprüche 8 oder 9, wobei, um wenigstens einen zu erzeugenden Beleuchtungsstrahl sowie dessen Richtung und dessen Verbreiterung zu bestimmen,
für jeden zu erzeugenden Beleuchtungsstrahl der vertikale Winkel, der horizontale Winkel und der Öffnungswinkel des Strahls in Abhängigkeit von vorbestimmten Werten der Koordinaten und von der Erstreckung des zu beleuchtenden Bereichs bestimmt werden, so dass der Strahl einen vordefinierten Bereich des Raumes um das Luftfahrzeug beleuchtet, und anschließend die bestimmten Werte in Abhängigkeit von den Flugdaten korrigiert werden, welche wenigstens die jeweiligen Positionen der Start- und Landebahn und des Luftfahrzeugs umfassen.

## Claims

1. Lighting system for an aircraft, comprising an optical acquisition device, at least one long-range headlight (12a,12b,13a,13b,14a,14b), each comprising at least one light source (3a,3b), closed-loop control means (4), and a means (5) for controlling the light sources (3a,3b), **characterized in that** the control means (5) is dependent on the data received from the optical acquisition device and from a data network of the aircraft in such a manner that the lighting system produces at least one beam for adaptive illumination with respect to each of the flight and taxi phases of the aircraft so as to illuminate at least one predefined region of the space around the aircraft,
the flight and taxi phases comprising the taxi phase, the runway turn-off phase, the take-off/landing phase, the approach phase and the touch-down phase.

2. System according to the preceding claim, in which the long-range headlight (12a,12b,13a,13b,14a,14b) is designed to illuminate an aircraft runway to a distance of at least 300m.

3. System according to Claim 1 or 2, in which the long-range headlight (12a,12b,13a,13b,14a,14b) comprises a high-speed scanning device (7a,7b) equipped with at least two rotary reflecting surfaces, whose axes of rotation are orthogonal and disposed in such a manner that the beam at the exit of the light source (3) is successively reflected on one then the other of the reflecting surfaces.

4. System according to Claim 1 or 2, in which the long-range headlight (12a,12b,13a,13b,14a,14b) comprises at least one centred optical system with variable focal point (8a,8b) or at least one centred optical system with fixed focal point whose focal plane is occupied by a light source (3a,3b), together with means of moving the light source (3a,3b) such that the direction of the light beam may be inclined with respect to the axis of the centred optical system (8a,8b) and/or moved perpendicularly to the focal plane such that the aperture of the beam may be enlarged.

5. System according to Claim 4, in which the long-range headlight (12a,12b,13a,13b,14a,14b) comprises a glass with striated and prismatic regions (9a,9b) disposed at the exit of the centred optical system (8a,8b) allowing at least one lighting beam to be generated.

6. System according to any one of the preceding claims, in which the long-range headlight (12a,12b,13a,13b,14a,14b) comprises an assembly (10a,10b) of at least two luminophores, each designed to absorb the light emitted by a light source (3a,3b) and to re-emit white light.

7. System according to any one of the preceding claims, in which the light source (3a,3b) is a light source of the laser type or a light source of the laser type obtained by combination of a red monochromatic light source of the laser type, of a green monochromatic light source of the laser type and of a blue monochromatic light source of the laser type.

8. Method for controlling a lighting system according to any one of the preceding claims, **characterized in that** it comprises the following steps:
an image of the scene in front of the aeroplane is acquired with an optical acquisition device (2),
a shape recognition is performed on the acquired image of the scene in order to distinguish the various objects present, notably the runway, the ground signalling, and any potential obstacles,
flight information is obtained from the data network of the aircraft,
the flight phase in progress is determined according to the acquired information and of a predetermined model,
for each flight phase, at least one lighting beam to be turned on is determined, together with their direction and their distribution according to the flight phase determined and the objects recognized in front of the aeroplane,
the setpoints are determined corresponding to the direction of the light sources (3a,3b), for the closed-loop control means (4) and, when it is applicable, for the means of moving at least one light source according to the lighting beams to be illuminated, and also their directions and their distributions,
the flight and taxi phases comprising the taxi phase, the runway turn-off phase, the take-off/landing phase, the approach phase and the touch-down phase.

9. Method according to Claim 8, in which the flight information comprises at least one value from amongst the speed, the altitude, the attitude angle, the thrust, the state of inversion of the thrust, the contact of the wheels with the ground, the position of the attack edges and of the flaps.

10. Method according to either one of Claims 8 and 9, in which, for determining at least one lighting beam to be turned on, together with their direction and their distribution,
for each lighting beam to be turned on,
the vertical angle, the horizontal angle and the aperture of the beam are determined as a function of predetermined values of the coordinates and of the extent of the area to be illuminated, in such a manner that the beam illuminates a predefined region of the space around the aircraft, then the determined values are corrected as a function of the flight data comprising at least the respective positions of the runway and of the aircraft.
